# EUROPEAN PATENT APPLICATION

(11) **EP 2 549 368 A2**
(43) Date of publication of application: **23.01.2013**
(21) Application number: 12161269.1
(22) Date of filing: 26.03.2012
(51) Int. Cl.: G06F 3/048

(54) **Displaying apparatus and method for displaying thereof**

(30) Priority: 20.07.2011 KR 20110072133
(71) Applicant: Samsung Electronics Co., Ltd., Suwon-si, Gyeonggi-do, 443-742 (KR)
(72) Inventor: Lea, Jong-ho, Korea (KR)
(74) Representative: Robinson, Ian Michael

(57) **Abstract**

A display apparatus and a method for displaying thereof are provided. The display apparatus includes a display unit which displays an object and a pointer, an input unit which receives input of a user command, and a controller which moves the pointer according to the user command, and adjusts movement precision of the pointer by decreasing movement reaction of the pointer using the user command as a reference, where the movement reaction of the pointer is decreased if a position of the pointer is within an allowable error range set of the object. Accordingly, the allowable error range of the displayed object is adaptively adjusted according to the moving condition of the pointer.

## Description

### CROSS-REFERENCE TO RELATED APPLICATION

This application claims the benefit of priority under 35 U.S.C. § 119(a) from Korean Patent Application No. 10-2011-0072133, filed on July 20, 2011, in the Korean Intellectual Property Office.

### BACKGROUND

### 1. Field

Methods and apparatuses consistent with exemplary embodiments relate to a display apparatus and a method for displaying thereof, and more particularly, to a display apparatus which selects an object and displays a screen effect according to the selection of the object, and a method for displaying thereof.

### 2. Description of the Related Art

Recently, as smart apparatuses such as smart TVs, smart phones, and social network game consoles have become widespread and have been used by a wide range of age groups, the use of the smart apparatus has been popularized. For example, the user uses the smart TV not only to watch TV but also for diverse purposes such as shopping, web surfing, and gaming. Such smart apparatuses work according to a control command input through an external apparatus such as a remote controller or a joystick, and execute contents desired by the user. That is, the user selects at least one object displayed on a screen of the smart apparatus using an external apparatus, which is adapted to control the smart apparatus, and uses desired contents. In other words, in order to use the contents that the user desires, the user selects an object by moving a pointer displayed on the screen toward the object and executes corresponding contents.

Thus, in a related-art method, it is very important to match the object with the pointer to select the object. Therefore, if a great number of objects are displayed on the screen or if a reaction speed of the object is high, the user may fail to select the desired object. Also, since the related-art smart apparatus interprets user's intention in a loop method depending on a timer, that is, according to a speed of the screen and a speed of the pointer operating according to the control command of the external apparatus, if the user's age is high or the user is unskilled in manipulating the smart apparatus, the user has difficulty in adapting to the smart apparatus and thus may experience frustration and lose interest in using the smart apparatus.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiment provides a method of facilitating use of a display apparatus such as a smart apparatus regardless of user's age or unskilled manipulation, and also provides a method of adjusting performance of a display apparatus such as a smart apparatus to adaptively correspond to age or career of a user or to an external apparatus operating in association with the display apparatus.

According to the present invention there is provided an apparatus and method as set forth in the appended claims. Other features of the invention will be apparent from the dependent claims, and the description which follows. According to an aspect of an exemplary embodiment, there is provided a display apparatus including: a display unit which displays an object and a pointer, an input unit which receives input of a user command, and a controller which moves the pointer according to the user command, and which adjusts movement precision of the pointer by decreasing movement reaction of the pointer using the user command as a reference, where the movement reaction of the pointer is decreased if a position of the pointer is within an allowable error range of the object.

The controller may gradually increase in a plurality of stages a size of the allowable error range, and may control movement of the pointer within each of the allowable error range according to the movement reaction set for each of the allowable error range gradually increased.

If the object is selected, the controller may perform adaptive reaction by controlling the display unit to gradually increase in the plurality of stages a screen effect display area corresponding to the selected object.

If the object is selected, the controller may perform adaptive reaction by controlling the display unit to gradually display a screen effect corresponding to the selected object at a speed corresponding to the degree of movement reaction within each of the allowable error range.

If input of another command to select the obj ect is received in a state where the pointer is moved to the allowable error range, the controller may recognize that the object is selected and perform a function corresponding to the object.

A size and a shape of the allowable error range may be adaptively set according to at least one of a user's selecting error rate, user's age, a user's skill, object density, and location of an adjacent object.

The size and shape of the allowable error range may be set so that it does not overlap an allowable error range of an adjacent object.

According to an aspect of another exemplary embodiment, there is provided a method of displaying an object and a pointer, the method including : displaying the pointer to select the object according to a request from a user, moving the pointer at a movement reaction which is decreased if the pointer is located within an allowable error range, and, if the object is selected as the pointer is moved, displaying in stages a screen effect corresponding to the obj ect .

The moving the pointer may include: checking whether the pointer is located within the allowable error range, and , if it is determined that the pointer is located within the allowable error range, gradually increasing in stages a size of the allowable error range, and controlling movement of the pointer within each of the allowable error range according to movement reaction information corresponding to each of the allowable error range.

The displaying the screen effect in stages may include performing adaptive reaction by gradually increasing in stages a screen effect display area corresponding to the selected object according to whether the object is selected.

The displaying the screen effect on the screen in stages may include gradually displaying the screen effect corresponding to the selected object at a speed corresponding to the movement reaction within each of the allowable error range according to whether the object is selected.

The object may be selected by moving the pointer which has a decreased movement reaction within each of the allowable error range or by receiving a command to select the object from the user within each of the allowable error range.

A size and a shape of the allowable error range may be adaptively set according to at least one of a user's selecting error rate, user's age, a user's skill, object density, and location of an adjacent object.

A size and a shape of the allowable error range may be set so that the allowable error range does not overlap an allowable error range of an adjacent object.

According to the exemplary embodiments described above, the allowable error range of the object is adaptively adjusted according to the moving condition of the pointer so that a novice user who is unskilled in manipulating the apparatus or an older user can easily use the apparatus.

Additional aspects of exemplary embodiments will be set forth in the detailed description, will be obvious from the detailed description of exemplary embodiments, or may be learned by practicing the exemplary embodiments.

### BRIEF DESCRIPTION OF THE DRAWING FIGURES

The above and/or other aspects will be more apparent by describing in detail exemplary embodiments, with reference to the accompanying drawings, in which:

FIG. 1 is a block diagram illustrating a display apparatus according to an exemplary embodiment;

FIGS. 2A is a view illustrating a first example to explain an operation of adjusting size and shape of an allowable error range of objects arranged in a vertical direction in stages according to an exemplary embodiment;

FIG. 2B is a view illustrating a second example to explain the operation of adjusting the size and the shape of the allowable error range of the objects arranged in the vertical direction in stages according to an exemplary embodiment;

FIG. 2C is a view illustrating an example to explain an operation of adaptively displaying a screen effect according to the size and the shape of the allowable error range of the objects arranged in the vertical direction according to an exemplary embodiment;

FIG. 3A is a view illustrating a first example to explain an operation of adjusting an allowable error range of objects arranged in a horizontal direction in stages according to an exemplary embodiment;

FIG. 3B is a view illustrating a second example to explain the operation of adjusting the allowable error range of the objects arranged in the horizontal direction in stages according to an exemplary embodiment;

FIG. 3C is a view illustrating an example to explain an operation of adaptively displaying a screen effect according to the size and the shape of the allowable error range of the objects arranged in the horizontal direction according to an exemplary embodiment;

FIG. 4 is a flowchart illustrating a method of displaying an object and a screen effect on a display apparatus according to an exemplary embodiment; and

FIG. 5 is a flowchart illustrating a method of moving a pointer on a display apparatus according to an exemplary embodiment.

### DETAILED DESCRIPTION OF THE EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

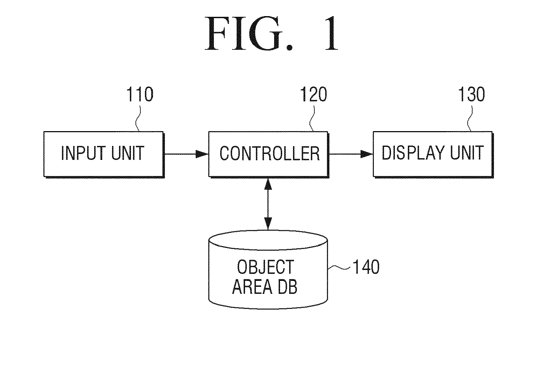

FIG. 1 is a block diagram illustrating a display apparatus according to an exemplary embodiment.

As shown in FIG. 1, a display apparatus comprises an input unit 110, a controller 120, and a display unit 130.

The input unit 110 receives a command of a user through an external apparatus at the user's request. The external apparatus may be a mouse, a remote controller, or a game joystick. The user may input a command to select an object displayed on a screen through such an external apparatus, and the controller 120 selects the object displayed on the screen according to the command. The object and a pointer to select the object are displayed on the screen through the display unit 130.

More specifically, in order to select at least one object displayed on the screen through the display unit 130, the user manipulates the external apparatus. According to a user's manipulation command, the controller 120 moves the pointer to a point where the object exists. If the pointer moved by the controller 120 according to the user's command is located within an allowable error range, which is set with reference to the object to be selected, the controller 120 adjusts movement precision of the pointer by decreasing movement reaction of the pointer by a degree. The allowable error range is a range to select an object therein. If the pointer is located within the allowable error range, the controller adjusts the movement precision of the pointer by decreasing movement reaction of the pointer by the degree, that is, a movement reaction speed of the pointer is decreased.

For example, if the pointer moving at an operation speed of 10 levels according to a user's command is located within the allowable error range set with reference to the object, the pointer is adjusted to move at an operation speed of 5 levels. As described, if the pointer is located within the allowable error range set with reference to the object, the controller 120 adjusts the movement precision of the pointer by decreasing the movement reaction speed of the pointer. Therefore, even if the objects are densely concentrated or the movement reaction speed is very high, an unskilled novice user can select the object easily.

The controller 120 controls the movement of the pointer by decreasing the movement reaction speed of the pointer, according to a control command such as the one described below. First, the controller 120 gradually increases the size of the allowable error range of the at least one object displayed on the screen in plural stages according to a movement path of the pointer. An initial size of the allowable error range of the object displayed on the screen may be set based on meta information pre-stored in an object area database (DB) 140. The meta information pre-stored in the object area DB 140 comprises information on a product specification and information on an object size. Accordingly, the controller 120 sets the initial size of the allowable error range of the object displayed on the screen with reference to the meta information stored in the object area DB 140.

In a state where the initial size of the allowable error range of the object is set, if a command to select is input by the user through the input unit 110, the controller 120 gradually increases the size of the allowable error range of the object so that the pointer at the point where the command is input is located within the allowable error range of the object to be selected. According to an exemplary embodiment, the controller 120 calculates coordinate values of the pointer at a point of time when the command to select is input, compares the calculated coordinate values and coordinate values of the objects displayed on the screen, and increases the allowable error range of the object which is set initially in stages. However, this should not be considered as limiting and the controller 120 may increase the allowable error range of the object with the smallest error range and the allowable error ranges of the other objects that surround the object.

That is, the controller 120 adaptively sets the size and the shape of the allowable error range of the object, considering a user's error rate in selecting objects, user's age, user's skill, object density, and locations of the other objects surrounding the object, which are pre-stored in the object area DB 140. According to an exemplary embodiment, the controller 120 may increase the size of the allowable error range of the object in 5 stages at the maximum according to the user's age. Accordingly, if the user's age is low, the controller 120 increases the size of the allowable error range as much as one stage at a time, and, if the user's age is high, the controller 120 increases the size of the allowable error range as much as two stages at a time.

According to another exemplary embodiment, the controller 120 may adjust the shape of the allowable error range of the object to be selected and the shape of the allowable error range of the other objects that surround the object, considering the location of the surrounding objects. For example, if the surrounding objects are located above and under the object to be selected, the controller 120 controls to expand the shape of each of the allowable error ranges horizontally so that the allowable error ranges of the objects do not overlap one another. For another example, if the surrounding objects are located on the left and the right of the object to be selected, the controller 120 controls to expand the shape of each of the allowable error ranges vertically so that the allowable error ranges of the objects do not overlap one another.

In a state where the size and the shape of the allowable error ranges of the objects are gradually increased according to the above condition, if the pointer is located within the allowable error range of the object to be selected, the controller 120 controls the movement reaction speed of the pointer in response to the operation of gradually increasing the size of the allowable error range of the object. For example, if the allowable error range of the object is increased in 3 stages, the controller 120 may decrease the movement reaction speed of the pointer located within the allowable error range of the object by about 1/3 compared to an original reaction speed.

As described above, the movement reaction speed of the pointer located within the allowable error range of the object is decreased in response to the operation of adjusting the allowable error range so that an error in selecting an object can be minimized. Specifically, the pointer may move to an allowable error range of an object that is located at a point that the user does not intend. Therefore, if the controller 120 moves the pointer to the allowable error range of the object and simultaneously selects the object, the user may select the object that he or she did not wish to select *i.e.,* the wrong object. Therefore, the user would need to cancel the selected object and re-select an object that the user wishes to select. This will cause inconvenience to the user. Accordingly, in an exemplary embodiment, the movement reaction speed of the pointer located within the allowable error range of the object is decreased in response to the operation of adjusting the allowable error range, so that the user can correctly select the object that the user wishes to select and the error in selecting the object can be minimized.

If the object is selected by locating the pointer within the allowable error range of the object, the controller 120 performs adaptive reaction by controlling the display unit 130 to gradually increase a screen effect display area corresponding to the selection of the object in plural stages. More specifically, if the pointer is located within the allowable error range of the object which has been gradually increased in stages, the controller 120 decreases the movement reaction speed of the pointer in response to the operation of gradually increasing the size and the shape of the allowable error range as described above. After that, the controller 120 selects the object by moving the pointer at the movement reaction speed, which has been decreased, to the initial allowable error range of the object. However, this should not be considered as limiting and is provided only by way of an example. In a state where the pointer moves to the allowable error range of the object, which was gradually increased, if a command to select the obj ect is input through the input unit 110 according to the user's command, the controller 120 selects the object.

As described above, if the object is selected, the controller 120 controls the display unit 130 to perform an operation relating to the selected object in response to the operation of increasing the size and the shape of the allowable error range of the object. For example, if the object displayed on the screen is selected, an image relating to explosion may be displayed on the screen. Specifically, if the object corresponding to the image relating to the explosion is selected and the size and the shape of the allowable error range of the selected object is increased in 3 stages, the controller 120 controls the display unit 130 to display the image relating to the explosion in 3 stages. Accordingly, the display unit 120 gradually increases the size of the image relating to the explosion and displays the image on the screen.

If the pointer moves to the allowable error range of the obj ect gradually increased and the object is selected, the controller 120 may perform adaptive reaction by controlling the display unit 130 to display a screen effect relating to the object at a speed corresponding to the movement reaction speed of the pointer which is decreased in response to the operation of gradually increasing the size and the shape of the allowable error range of the object. For example, if the object displayed on the screen is selected, an image relating to the object may be displayed. If the object corresponding to the image is selected, the controller 120 checks the movement reaction speed of the pointer that is decreased_in response to the operation of increasing the size and the shape of the allowable error range of the selected object. As a result, if it is checked that the movement reaction speed of the pointer is decreased by 1/3, the controller 120 controls the display unit 130 to allow the speed of the image relating to the selected object to correspond to the movement reaction speed of the pointer. Accordingly, the display unit 130 decreases the speed of the image relating to the selected object by 1/3 and displays the image, so that the user can view an important image in slow motion.

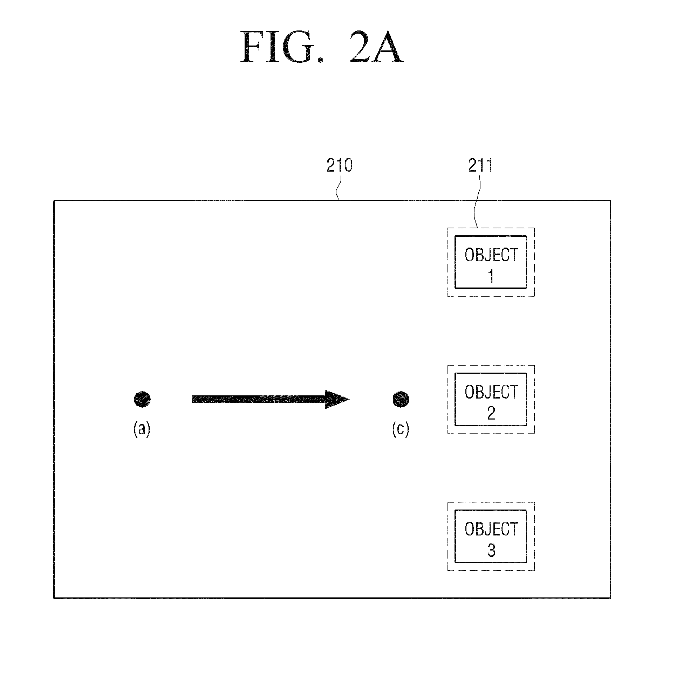

Above, an exemplary embodiment is described in which the elements of the display apparatus which adaptively change the allowable error range of the object to select the object and adaptively change the movement speed of the pointer and the screen effect of the selected object according to the changed allowable error range have been described. Hereinafter, the display apparatus according to the exemplary embodiment will be explained in detail. First, an operation of adjusting size and shape of an allowable error range of objects arranged in a vertical direction and adaptively displaying a screen effect according to the adjusted allowable error range according to an exemplary embodiment will be explained with reference to FIGS. 2A to 2C.

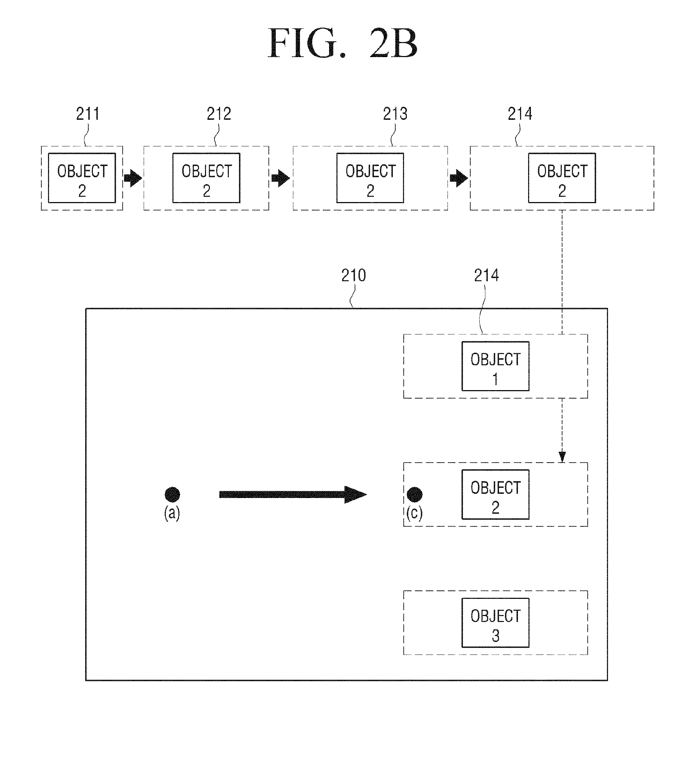

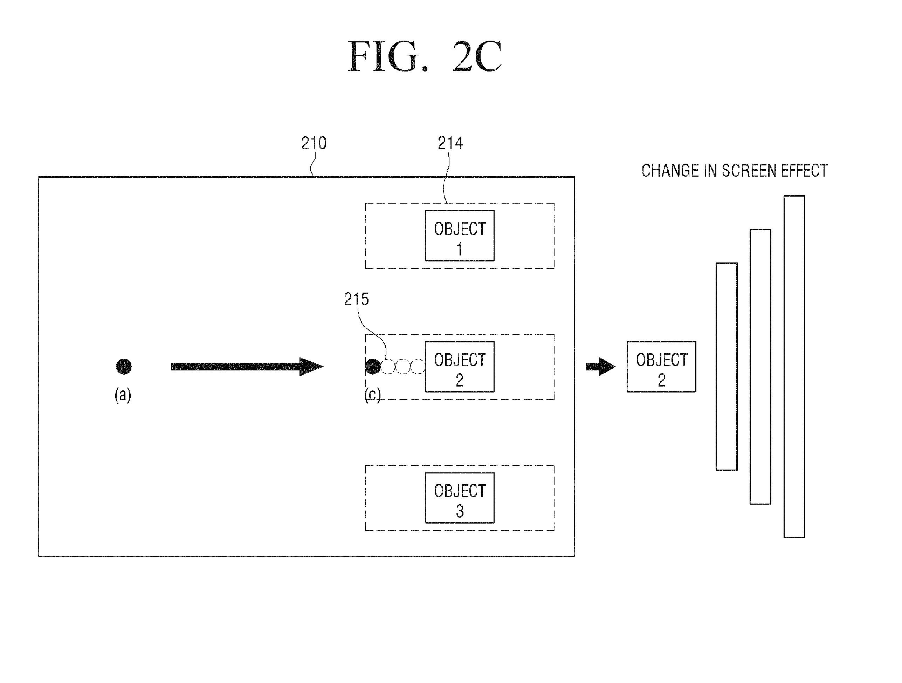

FIG. 2A is a view illustrating a first example to explain an operation of adjusting size and shape of an allowable error range of objects arranged in a vertical direction in stages according to an exemplary embodiment, FIG. 2B is a view illustrating a second example to explain the operation of adjusting the size and shape of the allowable error range of the objects arranged in the vertical direction in stages according to an exemplary embodiment, and FIG. 2C is a view illustrating an example to explain an operation of adaptively displaying a screen effect according to the size and shape of the allowable error range of the objects arranged in the vertical direction according to an exemplary embodiment.

As shown in FIG. 2A, the user moves a pointer (a) displayed on a screen 210 to the right to point (c) through the external apparatus in order to select object 2 from a plurality of objects 1-3 displayed in a vertical direction on the screen 210. Accordingly, the controller 120 follows a trajectory of the pointer (a) and checks whether the pointer (a) moved to the right to the point (c) is out of a predetermined area for a predetermined time or not. As a result, if it is determined that the pointer (a) moved to the right to the point (c) is not out of the predetermined area for the predetermined time, the controller 120 increases the size 211 of the allowable error range of object 2 to size 212, as shown in FIG. 2B. At this time, the controller 120 may increase only the size of the allowable error range 211 of object 2 that is closest to the pointer (a) moved to the right to point (c) in stages or may increase the size of the allowable error range 211 of object 2 and the size of the allowable error range 211 of objects 1 and 3 adjacent to object 2 in stages. Hereinafter, an operation of increasing the size of the allowable error range 211 of the object 2 and the size of the allowable error range 211 of objects 1 and 3 adjacent to object 2 in stages will be explained.

More specifically, if it is checked that the pointer (a) moved to the right to point (c) is not out of the predetermined area for the predetermined time, the controller 120 increases the size of the allowable error range 211 of objects 1-3 as much as one stage to size 212, as shown in the upper portion of FIG. 2B. At this time, since objects 1-3 are arranged in the vertical direction, the controller 120 increases the size of the allowable error range 211 of objects 1-3 in a horizontal direction so that the allowable error ranges 211 of objects 1-3 do not overlap one another. Accordingly, objects 1-3 have an allowable error range 212 increased by one stage.

After that, the controller 120 checks whether the pointer (a) is located within one of the allowable error ranges 212 of objects 1-3 increased by one stage. As a result, if the pointer (a) is not located within the allowable error range 212 increased by one stage, the controller 120 increases the allowable error range 212 of the objects 1-3 in stages i.e., by another stage to size 213 and then by one more stage to size 214, and checks whether the pointer (a) is located within one of allowable error ranges 214. Eventually, if it is checked that the pointer (a) is located within an allowable error range 214 of object 2 increased in 3 stages, the controller 120 moves the pointer (a) in the allowable error range 214 so that the pointer (a) is located within the initial allowable error range 211 of object 2. At this time, the controller 120 decreases the movement reaction speed of the pointer (a) as much as the allowable error range increases. In the above exemplary embodiment, since the pointer (a) is located at point (c) within the allowable error range 214 increased in 3 stages, the movement reaction speed of the pointer (a) is decreased by 1/3. As such, the movement reaction speed of the pointer (a) located within the allowable error range 214 of object 2 is decreased in response to the operation of adjusting the allowable error range, so that object 1, 2, or 3 can be easily selected.

If the pointer (a) is located at point (c) within the allowable error range 211 of object 2 at the decreased movement reaction speed, that is, if the object 2 is selected, the controller 120 performs adaptive reaction so as to gradually increase a screen effect relating to object 2 as shown in FIG. 2C. For example, an image relating to object 2 may be displayed on the screen 210. Specifically, if object 2 is selected, the controller 120 adjusts a size of the image relating to object 2 in 3 stages as much as the allowable error range of object 2 increases and displays the image on the screen 210. Also, as the movement reaction speed of the pointer (a) is decreased 215 as much as the allowable error range of object 2 increases, the controller 120 decreases the speed of the image relating to object 2 as much as the decreased movement reaction speed and displays the image on the screen 210.

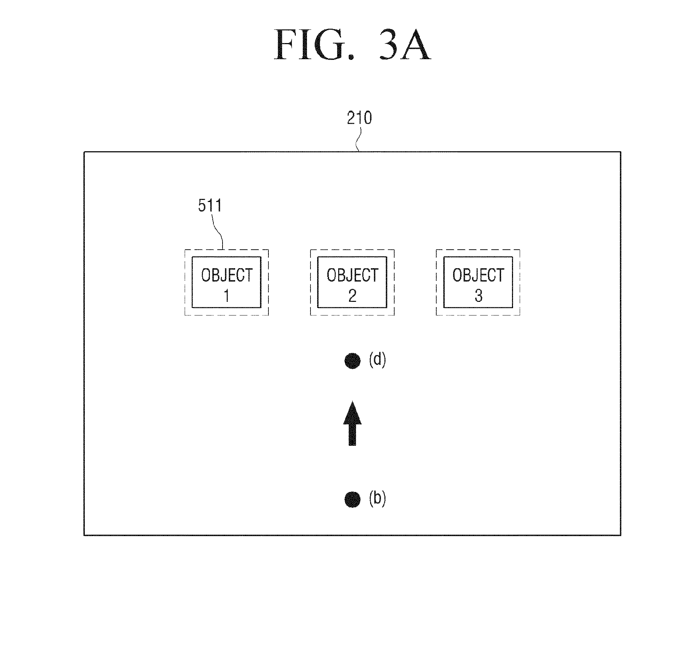

Hereinafter, an operation of adjusting size and shape of an allowable error ranges of objects arranged in a horizontal direction and adaptively displaying a screen effect according to the adjusted allowable error range according to an exemplary embodiment will be explained with reference to FIGS. 3A to 3C.

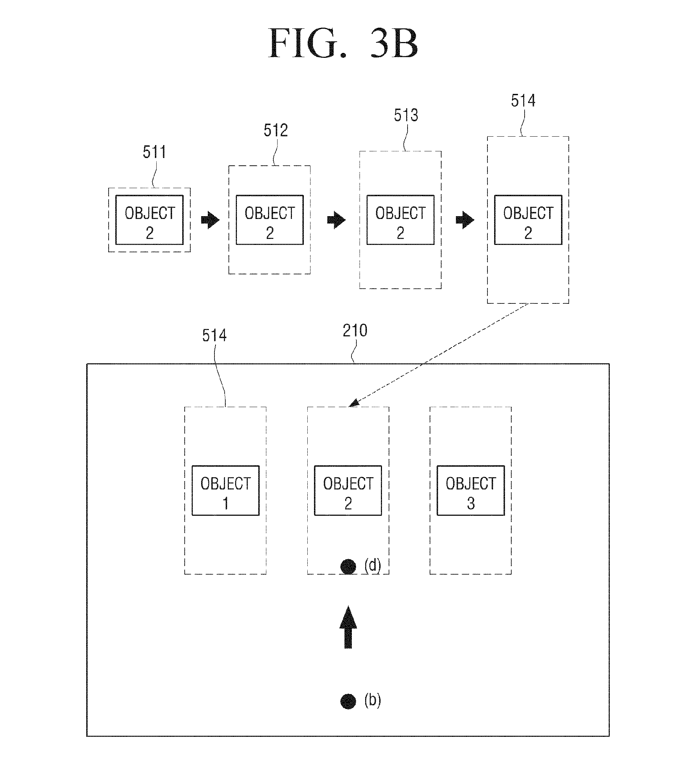

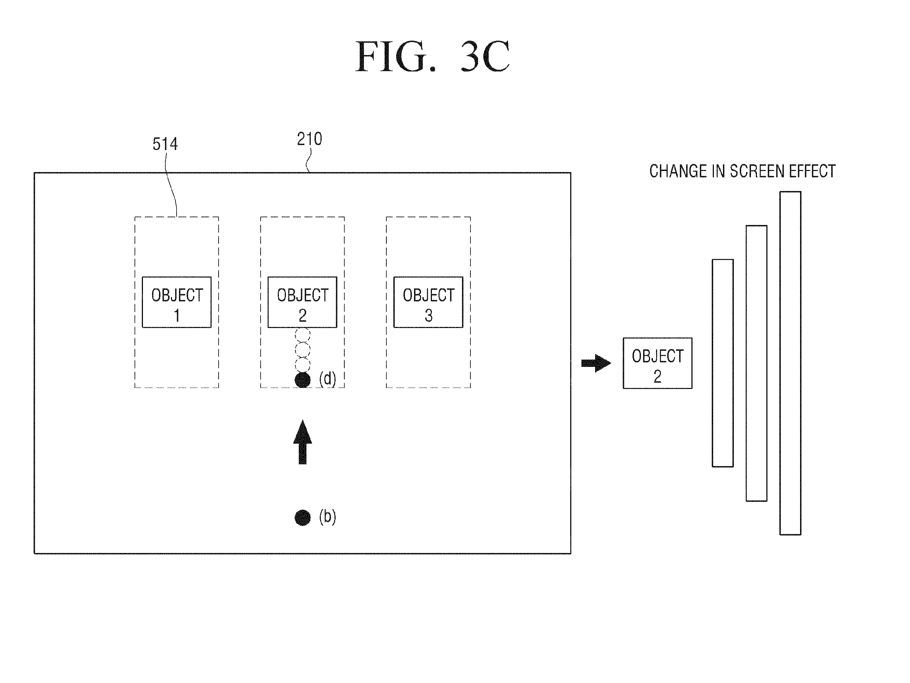

FIG. 3A is a view illustrating a first example to explain an operation of adjusting size and shape of an allowable error range of objects arranged in a horizontal direction according to an exemplary embodiment, FIG. 3B is a view illustrating a second example to explain the operation of adjusting the size and shape of the allowable error range of the objects arranged in the horizontal direction according to an exemplary embodiment, and FIG. 3C is a view illustrating an example to explain an operation of adaptively displaying a screen effect according to the size and shape of the allowable error range of the objects arranged in the horizontal direction according to an exemplary embodiment.

As shown in FIG. 3A, the user moves a pointer (b) displayed on a screen 210 upwardly to point (d) using the external apparatus in order to select object 2 from a plurality of objects 1-3 displayed on the screen 210 in the horizontal direction. Accordingly, the controller 120 follows a trajectory of the pointer (b) to point (d) and checks or determines whether the pointer (b) moved upwardly is out of a predetermined area for a predetermined time or not. As a result, if it is determined that the pointer (b) moved upwardly to point (d) is not out of the predetermined area for the predetermined time, the controller 120 increases size 511 of an allowable error range of object 2 as shown in FIG. 3B to size 512. At this time, the controller 120 may increase only the size of the allowable error range 511 of object 2 which is the closest to the pointer (b) moved upwardly to point (d) in stages, or may increase the size of the allowable error range 511 of the obj ect 2 and the size of the allowable error range 511 of the objects 1 and 3 adjacent to the object 2. Hereinafter, an exemplary operation of increasing the size of the allowable error range 511 of obj ect 2 or the size of the allowable error range 511 of the obj ects 1 and 3 adj acent to the obj ect 2 in stages will be explained.

More specifically, if it is determined that the pointer (b) moved upwardly to point (d) is not out of the predetermined area for the predetermined time, the controller 120 increases the size of the allowable error range 511 of objects 1-3 as much as one stage to size 512, as shown in the upper portion of FIG. 3B. At this time, since objects 1-3 are arranged in the horizontal direction, the controller 120 increases the size of the allowable error ranges 511 of the obj ects 1-3 in a vertical direction so that the allowable error ranges 511 of obj ects 1 to 3 do not overlap one another. Accordingly, the objects 1-3 have an allowable error range 512 increased by one stage.

After that, the controller 120 determines whether the pointer (b) is located within one of the allowable error ranges 512 of objects 1-3 increased by one stage. As a result, if the pointer(b) is not located within the allowable error rage 512 increased by one stage, the controller 120 increases the allowable error range 512 of objects 1-3 in stages (first to size 513 and then to size 514) and checks whether the pointer (b) is located within one of the allowable error ranges 514. As a result, if it is determined that the pointer (b) is located within the allowable error range 514 of the object 2 increased in 3 stages, the controller 120 moves the pointer (b) located within the allowable error range 514 so that the pointer (b) is located within the initial allowable error range 511 of the object 2. At this time, the controller 120 decreases the movement reaction speed of the pointer (b) as much as the allowable error range increases. According to an exemplary embodiment, as the pointer (b) is located within the allowable error range 514 increased 3 stages, the controller 120 may decrease the movement reaction speed by 1/3. As described above, the movement reaction speed of the pointer (b) located within the allowable error range 514 of the object 2 is decreased in response to the operation of adjusting the allowable error range, so that object 1, 2, or 3 can be easily selected.

If the pointer (b) is located within the allowable error range 511 at the decreased movement reaction speed, that is, if the object 2 is selected, the controller 120 performs adaptive reaction so as to gradually increase a screen effect relating to the object 2 as shown in FIG. 3C. For example, an image relating to the object 2 may be displayed on the screen 210. Accordingly, if the object 2 is selected, the controller 120 adjusts the size of the image relating to the object 2 in 3 stages as much as the allowable error range of the object 2 increases and displays the image on the screen 210. Also, as the movement reaction speed of the pointer (b) is decreased as much the allowable error range of the object 2 increases, the controller 120 decreases the speed of the image relating to the object 2 as much as the decreased movement reaction speed and displays the image on the screen 210.

Above, exemplary elements of the display apparatus according to exemplary embodiments and their operations have been described. Hereinafter, an exemplary method for executing an object of a display apparatus which displays an object and a pointer on a screen according to an exemplary embodiment will be explained.

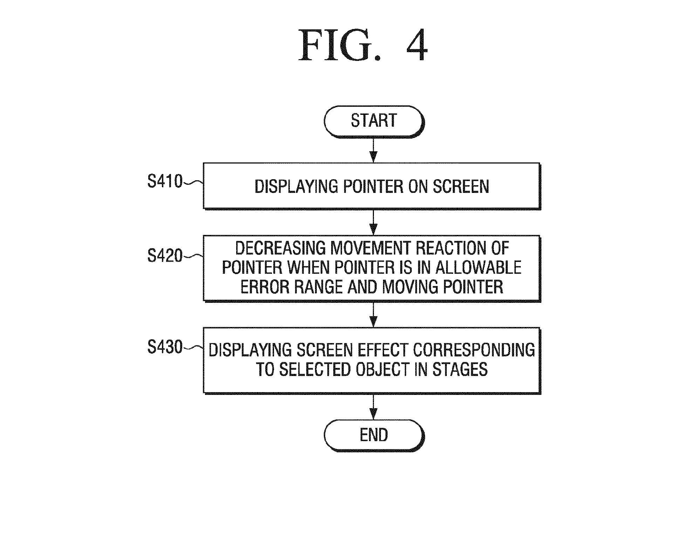

FIG. 4 is a flowchart illustrating a method of displaying an object and a screen effect of a display apparatus according to an exemplary embodiment.

As shown in FIG. 4, the display apparatus displays a pointer to select an object displayed on a screen according to a request from a user (S410). At least one object or a plurality of objects may be displayed on the screen. Also, the plurality of objects may be arranged in a vertical direction or a horizontal direction or some other direction.

If the object is displayed, the display apparatus moves the pointer displayed on the screen toward the object according to a request of the user. At this time, when moving the pointer, the display apparatus decreases a degree of movement reaction of the pointer, that is, a movement reaction speed of the pointer is decreased according to whether the pointer is located within an allowable error range set around the object (S420). The allowable error range is a range to select an object therein, and an initial size of the allowable error range may be set using meta information pre-stored in the object area DB. The meta information comprises information on a product specification and information on an object size. According to this condition, the display apparatus may set the allowable error range to select the object and decrease the movement reaction speed of the pointer according to whether the pointer is located within the set allowable error range or not. When the object is selected, the screen effect of the selected object is displayed in stages in operation 430.

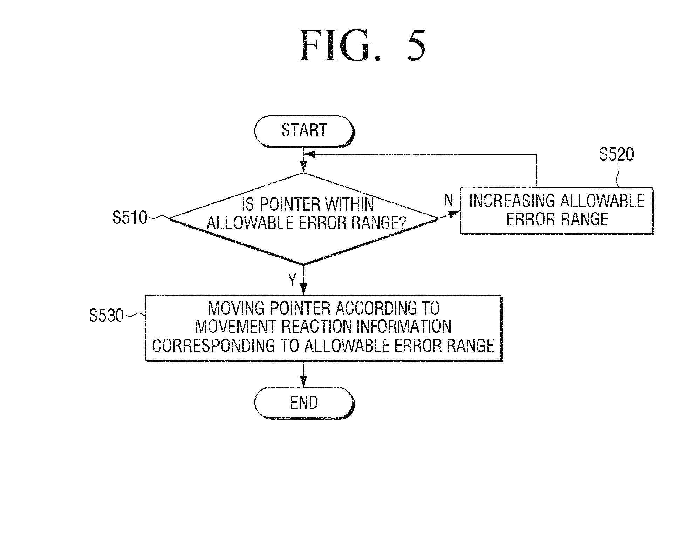

An exemplary method of moving the pointer at the decreased movement reaction speed of the pointer, if the pointer is located within the allowable error range of the object according to an exemplary embodiment will be explained with reference to FIG. 5.

FIG. 5 is a flowchart illustrating a method of moving the pointer on the display apparatus according to an exemplary embodiment.

As shown in FIG. 5, a user may input a command to select an object displayed on a screen using an external apparatus which is configured to instruct the controller 120 to move a pointer. According to the command to select the object, the display apparatus moves the pointer toward the object. After that, the display apparatus follows a trajectory of the pointer and checks whether the pointer is located within a predetermined area. As a result, if it is checked or determined that the pointer is located within the predetermined area, the display apparatus checks whether the current pointer is located within an allowable error range of the object (S510). If it is checked or determined that the pointer is not located within the allowable error range of the object, the display apparatus increases the allowable error range of the object in stages (S520). According to an exemplary embodiment, if it is checked or determined that the pointer is located within the predetermined area, the display apparatus compares coordinate values of the current pointer and coordinate values of all of the objects displayed on the screen and increases the allowable error range of the object which is set initially in stages. However, this should not be considered as limiting and is provided only by way of an example. The display apparatus may increase the allowable error range of the object with the smallest error range with respect to the pointer and the allowable error range of other objects that are adjacent to the object in stages simultaneously. If the pointer is determined to be within the allowable error range, the pointer is moved according to the movement reaction information that corresponds to the allowable error range (S530).

As described above, the display apparatus may increase the size and the shape of the allowable error range of the obj ect in stages, considering at least one of a user's selecting error rate, user's age, user's skill, object density, and location of the other objects that surround the object, which are pre-stored in the object area DB. According to an exemplary embodiment, the display apparatus may increase the allowable error range of the object in 5 stages at the maximum according to the user's age. That is, if the user's age is lower than a predetermined age, the display apparatus may increase the size of the allowable error range as much as one stage at a time, and, if the user's age is higher than the predetermined age, the display apparatus may increase the size of the allowable error range as much as two stages at a time.

According to another exemplary embodiment, the display apparatus may adjust the shape of the allowable error range of the object to be selected and the shape of the allowable error range of the other object adjacent to the object to be selected, considering the location of the adj acent obj ect. For example, if surrounding obj ects are located above and under the object to be selected, the display apparatus increases the allowable error range of each of the objects horizontally so that the allowable error ranges of the objects do not overlap one another. As another example, if the surrounding objects are located on the right and the left of the object to be selected, the display apparatus increases the allowable error range of each of the objects vertically so that the allowable error ranges of the objects do not overlap one another.

As described above, if it is checked or determined that the pointer is located within the allowable error range of the object, as a result of increasing the size and shape of the allowable error range of the object in plural stages, the display apparatus controls the movement reaction speed of the pointer in response to the operation of gradually increasing the size of the allowable error range of the object gradually and moves the pointer (S530). For example, if the allowable error range of the object is increased in 3 stages, the display apparatus decreases the movement reaction speed of the pointer located within the allowable error range of the object by 1/3 compared to the original reaction speed. As described above, the movement reaction speed of the pointer located within the allowable error range of the object is decreased in response to the operation of adjusting the allowable error range, so that the error in selecting the object can be minimized and another object can be freely selected.

If the movement reaction speed of the pointer is decreased in response to the adjusted allowable error range of the object and the object is selected by moving the pointer at the decreased speed, the display apparatus displays a screen effect corresponding to the object on the screen in stages (S430). If the corresponding object is selected by moving the pointer as described above, the display apparatus performs adaptive reaction by gradually increasing a screen effect display area corresponding to the selection of the object in plural stages. More specifically, if the corresponding object is selected by moving the pointer, the display apparatus executes an operation relating to the selected object in response to the operation of increasing the size and shape of the allowable error range of the object. For example, if the object displayed on the screen is selected, an image relating to explosion may be displayed on the screen. If the object corresponding to the image relating to the explosion is selected and the size and shape of the allowable error range of the selected object are increased in 3 stages, the display apparatus expands the size of the image relating to the explosion in 3 stages and displays the image.

If the object is selected as the pointer moves to the allowable error range of the object gradually increased, the display apparatus displays a screen effect relating to the object at a speed corresponding to the movement reaction speed of the pointer which is decreased in response to the operation of increasing the size and shape of the allowable error range of the object. For example, if the object displayed on the screen is selected, an image relating to the object is displayed. If the object relating to the image is selected, the display apparatus checks the movement reaction speed of the pointer decreased in response to the operation of increasing the size and shape of the allowable error range of the selected object. As a result, if it is checked or determined that the movement reaction speed of the pointer is decreased by 1/3, the display apparatus controls a speed of the image relating to the selected object to correspond to the movement reaction speed of the pointer. Accordingly, the image displayed on the screen is reproduced at a speed decreased by 1/3 so that the user can view an important image in slow motion.

The display apparatus according to the exemplary embodiments has been described up to now.

The foregoing although a few preferred embodiments have been shown and described, it will be appreciated by those skilled in the art that various changes and modifications might be made without departing from the scope of the invention, as defined in the appended claims.

## Claims

1. A display apparatus comprising:
a display unit (130) which displays an object (2) and a pointer (a) on a screen (210);
an input unit (110) which receives input of a user command; and
a controller (120) which moves the pointer (a) on the screen (210) according to the user command, and adjusts movement precision of the pointer (a) by decreasing a degree of movement reaction of the pointer (a) if the user command is within an allowable error range (211) set with reference to the object (2).

2. The display apparatus as claimed in claim 1, wherein the controller (120) gradually increases a size of the allowable error range (211-214) in a plurality of stages, and controls movement of the pointer within each of the allowable error ranges (211-214) according to a degree of movement reaction corresponding to each of the allowable error range (211-214) which are gradually increased.

3. The display apparatus as claimed in claim 2, wherein, if the object (2) is selected by the user command, the controller (120) performs adaptive reaction by controlling the display unit (130) to gradually increase a screen effect display area corresponding to the selection of the obj ect (2) in the plurality of stages.

4. The display apparatus as claimed in claim 2, wherein, if the object (2) is selected, the controller (120) performs adaptive reaction by controlling the display unit (130) to gradually display a screen effect corresponding to the selection of the object at a speed corresponding to the degree of movement reaction within each of the allowable error ranges (211-214).

5. The display apparatus as claimed in any preceding claim, wherein, if a command to select the object (2) is input in a state where the pointer (a) is moved to the allowable error range (211), the controller (120) recognizes that the object (2) is selected and performs a function corresponding to the object (2).

6. The display apparatus as claimed in any preceding claim, wherein a size and a shape of the allowable error range (211) are adaptively set according to at least one of a user's selecting error rate, user's age, a user's skill, object density, and location of an adjacent object.

7. The display apparatus as claimed in any preceding claim, wherein the allowable error range (211) is set to have a size and a shape so that the allowable error range does not overlap an allowable error range of any adjacent object (1, 3).

8. A method of displaying on a display apparatus which displays at least one object (1, 2, 3) and a pointer (a) on a screen (210), the method comprising:
displaying the pointer (a) to select the object (2) on the screen (210) according to a request of a user;
moving the pointer (a) at a degree of movement reaction of the pointer which is decreased according to whether the pointer (a) is located within an allowable error range (211) set with reference to the object (2); and
if the object (2) is selected as the pointer (a) is moved, displaying in stages a screen effect corresponding to the object (2) on the screen (210).

9. The method as claimed in claim 8, wherein the step of moving the pointer comprises:
checking whether the pointer (a) is located within the allowable error range (211) set with reference to the object (2);
if it is checked that the pointer (a) is located within the allowable error range (211), gradually increasing in a plurality of stages a size of the allowable error range (211); and
controlling movement of the pointer (a) within each of the allowable error ranges (211-214) according to movement reaction information corresponding to each of the allowable error ranges (211) which is gradually increased in the plurality of stages.

10. The method as claimed in claim 9, wherein the displaying step comprises performing adaptive reaction by gradually increasing in the plurality of stages a screen effect display area corresponding to the selection of the object (2) according to whether the object (2) is selected or not.

11. The method as claimed in claim 9, wherein the displaying step comprises gradually displaying the screen effect corresponding to the selection of the object (2) at a speed corresponding to the degree of movement reaction within each of the allowable error ranges (211-2140 according to whether the object (2) is selected or not.

12. The method as claimed in claim 10 or 11, wherein the object (2) is selected by moving the pointer (a) with a degree of movement reaction of which has been decreased within each of the allowable error ranges (211-214) or by receiving a command to select the object (2) from the user within each of the allowable error ranges (211-214).

13. The method as claimed in any of claims 9 to 12, wherein a size and a shape of the allowable error range (211) are adaptively set according to at least one of a user's selecting error rate, user's age, a user's skill, object density, and location of an adjacent object (1, 3).

14. The method as claimed in any of claims 9 to 13, wherein the allowable error range (211) is set to have a size and a shape so that the allowable error range (211) does not overlap an allowable error range of an adjacent object (1, 3).
